# FASCICULE DE BREVET EUROPEEN

(11) **EP 3 398 823 B1**
(45) Date de publication et mention de la délivrance du brevet: **27.11.2019**
(21) Numéro de dépôt: 18166103.4
(22) Date de dépôt: 06.04.2018
(51) Int. Cl.: B60T 7/20, B60T 13/66, B60T 13/68, B60T 13/16, B60T 13/26

(54) **CIRCUIT DE FREINAGE HYDRAULIQUE AMÉLIORÉ**
VERBESSERTER HYDRAULISCHER BREMSSCHALTKREIS
IMPROVED HYDRAULIC BRAKING CIRCUIT

(30) Priorité: 07.04.2017 FR 1753050
(43) Date de publication de la demande: 07.11.2018
(73) Titulaire: Poclain Hydraulics Industrie, 60410 Verberie (FR)
(72) Inventeur: LEMAITRE, Bertrand, 60410 VERBERIE (FR); DESMYTTERE, Antoine, 60410 VERBERIE (FR); PRIGENT, André, 60410 VERBERIE (FR); ZUST, Marko, 60410 VERBERIE (FR)
(74) Mandataire: Cabinet Beau de Loménie

(56) Documents cités:
- EP-A1- 1 800 983
- EP-A2- 1 281 592
- WO-A1-2017/050632
- GB-A- 2 053 397

## Description

### DOMAINE DE L'INVENTION

La présente invention concerne le domaine des circuits de freinage hydraulique, et trouve notamment une application pour les véhicules couplés à des remorques.

### ETAT DE LA TECHNIQUE ANTERIEURE

Les systèmes de freinage hydrauliques pour véhicules pouvant être munis d'une remorque, par exemple des tracteurs, doivent permettre d'assurer le pilotage du frein à la fois du véhicule et de la remorque. Le pilotage du frein de la remorque doit par ailleurs être distinct du pilotage du frein du véhicule pour des questions de réglementation.

Les systèmes conventionnels prévoient ainsi un pilotage de l'action de freinage sur la remorque via des commandes pilotées électriquement afin d'assurer un freinage de la remorque proportionnel au freinage du véhicule. Toutefois, en cas de défaillance du système électrique, le circuit de pilotage n'est plus opérationnel, et le frein de la remorque est alors maintenu engagé ou désengagé.

Dans le cas où le frein est maintenu engagé, on comprend que la remorque est alors nécessairement immobilisée, rendant de ce fait la poursuite de la mission en cours impossible, et nécessitant une réparation sur site ou sa prise en charge par un autre véhicule, ce qui est très contraignant. A l'inverse, dans le cas où le frein de remorque est maintenu désengagé, il est possible de poursuivre la mission en cours, mais l'absence de frein opérationnel sur la remorque est problématique en termes de sécurité, notamment lorsque le véhicule se déplace à vitesse relativement élevée. le document WO2017/050632 A1 divulgue un type de freinage de remorque conventionelle, sans électrovanne proportionelle reliée au premier orifice du circuit de pilotage.

### PRESENTATION DE L'INVENTION

Le présent exposé vise ainsi à proposer une réponse à cette problématique.

A cet effet, le présent exposé propose un circuit de pilotage d'un frein, comprenant un premier orifice adapté pour être relié à une source de pression, un deuxième orifice adapté pour être relié à un réservoir, un troisième orifice adapté pour recevoir une pression proportionnelle à une consigne de freinage, et un quatrième orifice adapté pour être relié à un frein, ledit circuit de pilotage comprenant
- une électrovanne proportionnelle reliée au premier orifice du circuit de pilotage,
- une électrovanne tout ou rien reliée au troisième orifice du circuit de pilotage,
- une valve de freinage proportionnelle munie d'un actionneur, configurée de manière à sélectivement relier un frein à une source de pression ou à un réservoir,
ledit circuit de pilotage étant caractérisé en ce que l'actionneur est configuré de manière à être pilotée par la pression la plus élevée parmi la pression délivrée par l'électrovanne proportionnelle et la pression délivrée par l'électrovanne tout ou rien.

Selon un exemple, l'actionneur comprend une commande hydraulique et un sélecteur de haute pression configuré de manière à relier l'électrovanne proportionnelle ou l'électrovanne tout ou rien à la commande hydraulique, l'électrovanne proportionnelle, l'électrovanne tout ou rien et le sélecteur étant configurés de manière à ce que dans une première configuration, la commande hydraulique de la valve de freinage soit reliée au premier orifice du circuit de pilotage via l'électrovanne proportionnelle, et que dans une seconde configuration, la commande hydraulique de la valve de freinage soit reliée au troisième orifice du circuit de pilotage via l'électrovanne tout ou rien.

Selon une variante d'un tel exemple, la valve de freinage présente typiquement un premier orifice relié au premier orifice du circuit de pilotage, un deuxième orifice relié au deuxième orifice du circuit de pilotage, un troisième orifice relié au frein, la valve de freinage étant pilotée par un moyen de rappel élastique auquel s'oppose une commande hydraulique, le moyen de rappel élastique tendant à positionner la valve de freinage dans une configuration dans laquelle son premier orifice est obturé, et son deuxième orifice est relié à son troisième orifice, le sélecteur présente une première admission, une seconde admission et un refoulement, ledit refoulement étant relié à la commande hydraulique de la valve de freinage auxiliaire, le sélecteur étant configuré de manière à relier l'admission présentant la pression la plus élevée au refoulement, l'électrovanne proportionnelle présentant un premier orifice relié au premier orifice du circuit de pilotage, un deuxième orifice relié au deuxième orifice du circuit de pilotage, et un troisième orifice relié à la première admission du sélecteur, l'électrovanne proportionnelle étant pilotée par un moyen de rappel élastique auquel s'oppose une commande électrique, le moyen de rappel élastique tendant à positionner l'électrovanne proportionnelle dans une configuration dans laquelle son premier orifice est obturé, et son deuxième orifice est relié à son troisième orifice, l'électrovanne tout ou rien présentant un premier orifice relié au troisième orifice du circuit de pilotage, un deuxième orifice relié au deuxième orifice du circuit de pilotage, et un troisième orifice relié à la seconde admission du sélecteur, l'électrovanne tout ou rien étant pilotée par un moyen de rappel élastique auquel s'oppose une commande électrique, le moyen de rappel élastique tendant à positionner l'électrovanne tout ou rien dans une configuration dans laquelle son deuxième orifice est obturé, et son premier orifice est relié à son troisième orifice.

Selon un exemple, l'actionneur comprend un premier piston associé à une première chambre reliée à l'électrovanne tout ou rien, un second piston associé à une seconde chambre reliée à l'électrovanne proportionnelle, de sorte que le pilotage de la valve de freinage soit réalisé par la pression la plus élevée parmi la pression au sein de la première chambre et la pression au sein de la seconde chambre.

De manière optionnelle, le circuit comprend en outre un réducteur de pression configuré de manière à limiter la pression appliquée par la source de pression à l'actionneur de la valve de freinage via le troisième orifice du circuit de pilotage.

Ledit réducteur de pression est alors typiquement taré à 25 bar.

Selon un exemple, le circuit de pilotage comprend en outre clapet anti retour taré reliant l'actionneur de la valve de freinage au deuxième orifice du circuit de pilotage, ledit clapet anti retour taré étant configuré de manière à permettre un passage de fluide depuis l'actionneur de la valve de freinage vers le deuxième orifice du circuit de pilotage lorsque la pression appliquée à l'actionneur de la valve de freinage dépasse une valeur seuil de pilotage.

Ladite valeur seuil de pilotage est alors typiquement égale à 30 bar.

Selon un exemple, la valve de freinage est configurée de manière à délivrer une pression de sortie via son troisième orifice amplifiée d'un rapport de sortie par rapport à la pression de pilotage appliquée à l'actionneur.

Ledit rapport de sortie est alors typiquement compris entre 4 et 9.

Selon un exemple, le troisième orifice du circuit de pilotage est adapté pour recevoir une pression proportionnelle à une pression appliquée à un frein principal de véhicule.

Le présent exposé concerne également un véhicule comprenant
- un circuit de pilotage tel que défini précédemment,
- une source de pression reliée au premier orifice du circuit de pilotage,
- un réservoir relié au deuxième orifice du circuit de pilotage,
- un frein relié au quatrième orifice du circuit de pilotage
- un circuit de commande configuré de manière à délivrer une pression proportionnelle à une consigne de freinage au troisième orifice du circuit de pilotage.

Selon un exemple, le circuit de commande comprend
- un frein principal,
- une première valve de freinage proportionnelle pilotant le frein principal, reliée à la source de pression, au troisième orifice du circuit de pilotage et au frein principal et configurée de manière à délivrer une pression au troisième orifice du circuit de pilotage et au frein principal proportionnelle à une commande mécanique.

Ledit véhicule comprend alors typiquement en outre un calculateur configuré de manière à commander l'électrovanne proportionnelle en fonction de la pression délivrée au frein principal par la première valve de freinage, notamment à l'aide d'un capteur de pression

Le présent exposé concerne également un véhicule comprenant
- un circuit de pilotage tel que défini précédemment,
- une première source de pression et une seconde source de pression, ladite seconde source de pression étant reliée au premier orifice du circuit de pilotage,
- un premier réservoir et un second réservoir, le second réservoir étant relié au deuxième orifice du circuit de pilotage,
- un frein relié au quatrième orifice du circuit de pilotage,
- un circuit de commande configuré de manière à moduler la pression issue de la première source de pression et à délivrer cette pression au frein principal, et à délivrer une pression proportionnelle à une consigne de freinage au troisième orifice du circuit de pilotage
- une valve de pilotage proportionnelle, reliée à la seconde source de pression, au second réservoir et au troisième orifice du circuit de pilotage, et comprenant une commande hydraulique reliée au frein principal, de manière à ce que la pression délivrée au troisième orifice par la seconde source de pression via la valve de pilotage soit proportionnelle à la pression délivrée au frein principal par la première source de pression.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente schématiquement un circuit de freinage hydraulique comprenant un circuit de pilotage selon un aspect de l'invention selon une première configuration,
- la figure 2 présente un exemple de structure pour la première valve de freinage proportionnelle présentée sur la figure 1,
- la figure 3 présente une variante du mode de réalisation représenté sur la figure 1,
- la figure 4 représente le circuit de freinage hydraulique de la figure 1 selon une seconde configuration,
- la figure 5 schématise l'action d'un circuit de freinage tel que présenté,
- la figure 6 présente une variante du mode de réalisation représenté sur la figure 3,
- la figure 7 présente une autre variante d'un circuit de pilotage selon le présent exposé,
- la figure 8 représente un exemple de valve employée dans la variante représentée sur la figure 7, et
- la figure 9 présente encore une autre variante d'un circuit de pilotage selon le présent exposé

Sur l'ensemble des figures, les éléments en commun sont repérés par des références numériques identiques.

### DESCRIPTION DETAILLEE D'EXEMPLES DE REALISATION

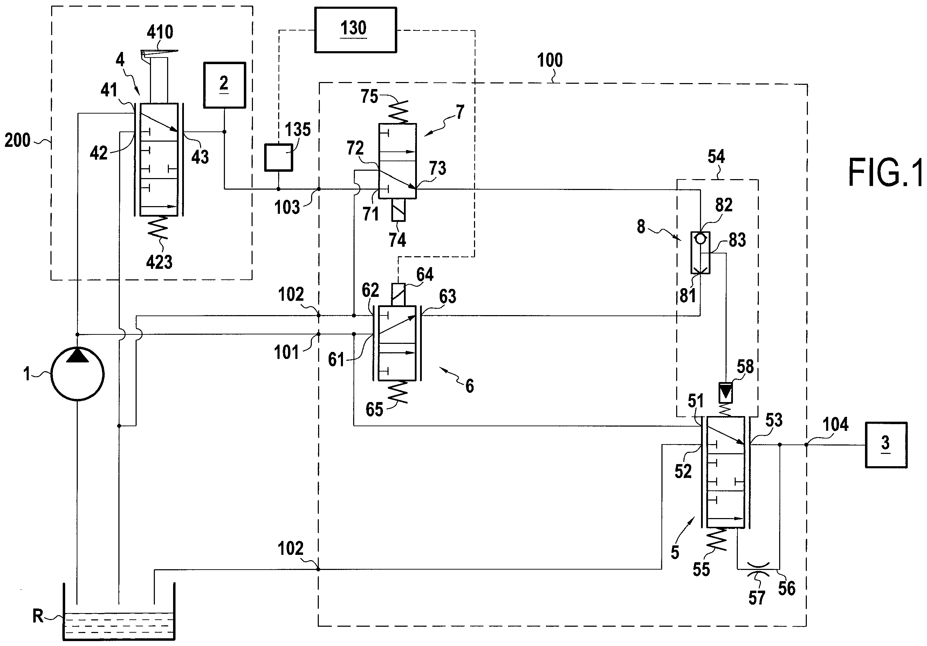

La figure 1 représente schématiquement un circuit de freinage hydraulique selon un aspect de l'invention selon une première configuration correspondant à un fonctionnement que l'on qualifie de normal, c'est-à-dire dans lequel il n'y a pas de défaillance, notamment pas de défaillance électrique.

Le circuit de freinage tel que présenté comprend une source de pression 1, un circuit de commande 200 comprenant un frein principal 2, un frein piloté 3. Le frein piloté 3 peut comprendre un ou plusieurs freins d'un véhicule ou d'un attelage.

La source de pression 1 est schématisée comme étant une pompe hydraulique puisant du fluide dans un réservoir R typiquement à pression ambiante, mais peut être tout moyen adapté, notamment une ou plusieurs pompes hydrauliques, un ou plusieurs accumulateurs hydrauliques éventuellement couplés à une ou plusieurs pompes hydrauliques. Dans le présent exposé, on désignera de manière générale par la référence R un réservoir auquel différents éléments sont reliés, étant entendu qu'il peut s'agit d'un réservoir unique ou de plusieurs réservoirs distincts.

Le frein principal 2 est typiquement le frein d'un véhicule adapté pour tracter une remorque, par exemple un tracteur. Ce frein principal 2 est typiquement un frein dynamique à freinage par pression, qui exerce un effort de freinage fonction de la pression qui lui est appliquée, par exemple dans une chambre de freinage, l'effort de freinage étant d'autant plus important que la pression est importante. Comme on le verra par la suite, le frein principal 2 est un élément du circuit de commande 200, le circuit de commande 200 étant configuré de manière à délivrer une consigne de freinage. Le mode de réalisation illustré comprenant le frein principal 2 n'est donc qu'un exemple non limitatif du circuit proposé.

Le frein piloté 3 est typiquement le frein d'une remorque associée au véhicule embarquant le circuit de freinage. Le frein piloté 3 est typiquement un frein dynamique à freinage par pression, qui exerce un effort de freinage fonction de la pression qui lui est appliquée, par exemple dans une chambre de freinage, l'effort de freinage étant d'autant plus important que la pression est importante. Le frein piloté 3 peut comprendre plusieurs freins, par exemple deux freins d'une remorque agissant chacun sur des roues ou des essieux distincts.

Afin de piloter le freinage du frein principal 2, le circuit de commande 200 comprend une première valve de freinage 4 proportionnelle reliant le frein principal à la source de pression 1. Plus généralement, le circuit de commande 200 permet de délivrer une pression proportionnelle à une consigne de freinage.

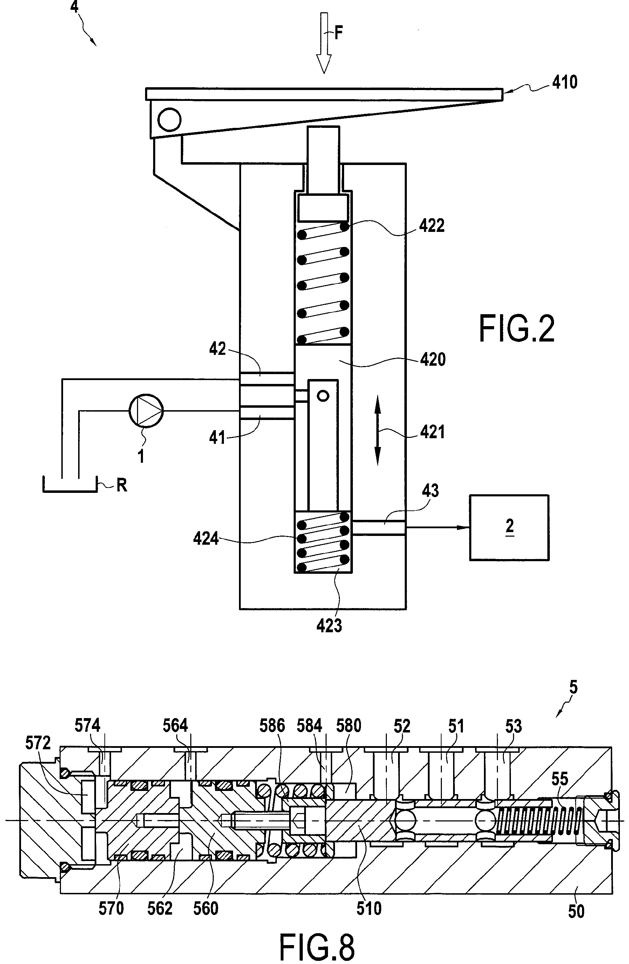

On a représenté sur la figure 2 un exemple de réalisation de cette première valve de freinage 4.

Cette première valve de freinage 4 comprend:
- un premier orifice 41 relié à la source de pression 1,
- un deuxième orifice 42 relié au réservoir R, et
- un troisième orifice 43 relié au frein principal 2, typiquement à une chambre du frein principal 2 telle qu'une chambre de freinage ou de défreinage, ce troisième orifice 43 formant un orifice de sortie de la première valve de freinage 4.

Comme visible sur la figure 2 la première valve de freinage 4 comprend un plongeur ou tiroir 420 monté en translation dans un cylindre 421 de manière à sélectivement mettre en communication le troisième orifice 43 avec le premier orifice 41 ou avec le deuxième orifice 42 en fonction d'un degré d'actionnement d'une commande mécanique 410 progressive, par exemple d'une pédale de frein. On schématise par une flèche F l'action d'un utilisateur sur la commande mécanique 410, ici une pédale de frein.

A cet égard, la première valve de freinage 4 comprend un ressort de chargement 422 mis en compression par actionnement de la commande mécanique 410, tendant au déplacement du plongeur 420 pour mettre en communication le premier orifice 41 avec le troisième orifice 43.

La première valve de freinage 4 comprend également une chambre de rétroaction 423 comprenant un ressort 424, le ressort 424 et la chambre de rétroaction 423 étant positionnés du côté opposé au ressort de chargement 422 par rapport au plongeur 420 pour exercer une poussée antagoniste à celle du ressort de chargement.

Ainsi en l'absence d'actionnement de la commande mécanique 410, le ressort 424 exerce une poussée sur le plongeur 420 qui met en communication le deuxième orifice 42 avec le troisième orifice 43, et relie ainsi le frein principal 2 au réservoir R.

Lors de l'actionnement de la commande mécanique 410, le ressort 422 augmente sa poussée sur le plongeur 420 pour mettre en communication le premier orifice 41 avec le troisième orifice 43 et ainsi appliquer une pression au frein principal 2, permettant de freiner. Parallèlement, la pression augmente également dans la chambre de rétroaction 423.

La pression dans la chambre de rétroaction 423 exerce une poussée sur le plongeur 420 s'opposant à la poussée du ressort de chargement 422 résultant de l'actionnement du frein principal 2, et tendant à réduire le débit s'écoulant depuis le premier orifice 41 vers le troisième orifice 43.

Lorsqu'il existe un équilibre entre la poussée du ressort de chargement 422 d'une part et la poussée exercée par la pression de fluide dans la chambre de rétroaction 423 d'autre part, le plongeur 420 se maintient en équilibre et maintient la pression au niveau du troisième orifice 43 (et donc la pression appliquée au frein principal 2) à une valeur constante proportionnelle à la sollicitation exercée par la commande mécanique 410.

L'équilibre dépend des caractéristiques géométriques de la première valve de freinage 4 (plongeur, cylindre) et du tarage du ressort de chargement 422. Ainsi, la première valve de freinage 4 délivre une pression via son troisième orifice 43 qui est proportionnelle à un degré d'actionnement de la commande mécanique 410, le coefficient de proportionnalité dépendant des caractéristiques de la première valve de freinage 4. L'association de la source de pression 1 et de la première valve de freinage permet donc de réaliser une source de pression délivrant une pression au frein principal 2 modulée par une commande, en l'occurrence proportionnelle à la commande mécanique 410.

A titre de variante, la première valve de freinage 4 peut être un maitre-cylindre ou toute autre commande de frein connu. Plus généralement, le circuit de commande est configuré pour délivrer une pression proportionnelle à une consigne de freinage. Dans l'exemple illustré, le frein principal 2 est lié à une source de pression configurée pour délivrer une pression proportionnelle à une commande.

Si on se réfère à nouveau à la figure 1, le circuit de freinage tel que présenté comprend un circuit de pilotage 100 du frein piloté 3, configuré de manière à sélectivement piloter son engagement.

Le circuit de pilotage 100 présente un premier orifice 101 relié à la source de pression 1, un deuxième orifice 102 relié au réservoir R, un troisième orifice 103 relié à la valve de freinage proportionnelle 4 du frein principal 2, et un quatrième orifice 104 relié au frein piloté 3. La pression délivrée au troisième orifice 103 du circuit de pilotage 100 est donc pilotée via la première valve de freinage 4, et est typiquement proportionnelle ou égale à la pression délivrée par la première valve de freinage 4 au frein principal 2. Plus généralement, le troisième orifice 103 du circuit de pilotage 100 est adapté pour recevoir une pression proportionnelle à une pression appliquée au frein principal 2. Plus généralement, le troisième orifice 103 reçoit une pression proportionnelle à une consigne de freinage, pouvant être liée ou non à une consigne appliquée à un frein principal 2.

Le circuit de pilotage 100 se présente typiquement sous la forme d'un boitier, ou sous la forme de différents éléments associés et reliés via des conduites hydrauliques. On comprend que certains des orifices mentionnés peuvent être dédoublés, notamment le deuxième orifice 102 relié au réservoir R peut être dédoublé en fonction de la structure des composants utilisés, ce qui est le cas sur les figures. Selon la structure retenue pour le circuit de pilotage 100, les orifices 101, 102, 103 et 104 peuvent être formés dans un boitier du circuit de pilotage, ou être formés directement par les orifices des valves et électrovannes que l'on décrit ci-après.

Le circuit de pilotage 100 tel que représenté sur la figure 1 comprend une valve de freinage 5, une électrovanne proportionnelle 6 et une électrovanne tout ou rien 7.

La valve de freinage 5 est une valve proportionnelle pilotée par une commande hydraulique.

La valve de freinage 5 présente un fonctionnement similaire à la première valve de freinage 4, tel que décrit en référence à la figure 1, seul le pilotage de cette valve de freinage 5 étant distinct, ici une commande hydraulique au lieu de la commande mécanique 410 de la première valve de freinage 4. La valve de freinage 5 présente un premier orifice 51 relié à la source de pression 1 via le premier orifice 101 du circuit de pilotage 100, un deuxième orifice 52 relié au réservoir R via le deuxième orifice 101 du circuit de pilotage 100, et un troisième orifice 53 relié au frein piloté 3 via le quatrième orifice 104 du circuit de pilotage 104, typiquement à une chambre du frein piloté 3 telle qu'une chambre de freinage ou de défreinage. La valve de freinage 5 est pilotée par une commande hydraulique 54 à laquelle s'oppose un moyen de rappel 55 tel qu'un ressort, et présente également une ligne de repiquage 56 réalisant une fonction de boucle de retour permettant d'atteindre un point d'équilibre lorsque la pression souhaitée est délivrée au niveau du troisième orifice 53 de la valve de freinage 5 (et donc au quatrième orifice 104 du circuit de pilotage 100). La ligne de repiquage 56 est typiquement munie d'un limiteur de débit 57 ou restriction, et applique une pression égale à la pression au niveau du troisième orifice 53 sur la valve de freinage 5, en opposition à l'action de la commande hydraulique 54. De manière préférentielle, la valve de freinage 5 est typiquement configurée de manière à délivrer une pression de sortie (c'est-à-dire à son troisième orifice 53, et donc au quatrième orifice 104 du circuit de pilotage 100) amplifiée d'un rapport de sortie par rapport à la pression de pilotage appliquée par la commande hydraulique 54. A titre d'exemple, ce rapport de sortie est typiquement compris entre 4 et 9, ou encore égal à 5, de sorte que la pression au niveau du troisième orifice 53 soit égale à 5 fois la pression de pilotage appliquée à la commande hydraulique 54.

La valve de freinage 5 est par défaut (c'est à dire en l'absence de l'application d'une pression via la commande hydraulique 54) dans une configuration dans laquelle le premier orifice 51 est obturé, et le deuxième orifice 52 est relié au troisième orifice 53. L'application d'une pression par la commande hydraulique 54 va basculer la valve de freinage 5 dans une configuration dans laquelle le premier orifice 51 est relié au troisième orifice 53, et le deuxième orifice 52 est obturé, proportionnellement à la pression appliquée par la commande hydraulique 54, de sorte que la pression au niveau du troisième orifice 53 soit proportionnelle à la pression appliquée via la commande hydraulique 54. C'est cette configuration qui est représentée sur les figures.

Dans le mode de réalisation représenté, la commande hydraulique 54 comprend un sélecteur de haute pression 8 et un actionneur hydraulique 58.

Le sélecteur de haute pression 8 présente une première admission 81, une seconde admission 82 et un refoulement 83, et est configuré de manière à relier l'admission parmi la première admission 81 et la seconde admission 82 ayant la pression la plus élevée au refoulement 83.

L'électrovanne proportionnelle 6 présente un premier orifice 61 relié à la source de pression 1 via le premier orifice 101 du circuit de pilotage 100, un deuxième orifice 62 relié au réservoir R via le deuxième orifice 101 du circuit de pilotage 100, et un troisième orifice 63 relié à la première admission 81 du sélecteur de haute pression 8.

L'électrovanne proportionnelle 6 est pilotée via une commande électrique 64 à laquelle s'oppose un moyen de rappel 65. L'électrovanne proportionnelle 6 est par défaut (c'est-à-dire en l'absence d'application d'une commande via la commande électrique 64) dans une première configuration dans laquelle le premier orifice 61 est obturé, et le deuxième orifice 62 est relié au troisième orifice 63. L'application d'une commande par la commande électrique 64 va entraîner un basculement proportionnel vers une seconde configuration dans laquelle le premier orifice 61 est relié au troisième orifice 63, et le deuxième orifice 62 est obturé, de manière à ce que la pression au niveau du troisième orifice 63 soit proportionnelle à la commande appliquée.

Dans le mode de réalisation illustré, le premier orifice 61 de l'électrovanne proportionnelle 6 et le premier orifice 51 de la valve de freinage 5 sont tous deux reliés au premier orifice 101 du circuit de pilotage 100, la conduite hydraulique reliée au premier orifice 101 bifurquant ainsi à l'intérieur du circuit de pilotage 100. On comprend bien qu'un circuit de pilotage présentant un fonctionnement similaire peut être réalisé en reliant le premier orifice 61 de l'électrovanne proportionnelle 6 et le premier orifice 51 de la valve de freinage 5 chacun à la source de pression 1 via des orifices distincts du circuit de pilotage 100. L'orifice 101 est alors dédoublé, la bifurcation étant réalisée en dehors du circuit de pilotage 100.

L'électrovanne tout ou rien 7 présente un premier orifice 71 relié au troisième orifice 43 de la première valve de freinage 4, un deuxième orifice 72 relié au réservoir R via le deuxième orifice 101 du circuit de pilotage 100, et un troisième orifice 73 relié à la seconde admission 82 du sélecteur de haute pression 8.

L'électrovanne tout ou rien 7 présente deux configurations ; une première configuration dans laquelle le premier orifice 71 est relié au troisième orifice 73 et le deuxième orifice 72 est obturé, et une seconde configuration dans laquelle le premier orifice 71 est obturé et le deuxième orifice 72 est relié au troisième orifice 73. L'électrovanne tout ou rien 7 est pilotée par une commande 74 électrique, à laquelle s'oppose un moyen de rappel 75 tel qu'un ressort. Le moyen de rappel 75 maintient par défaut (c'est-à-dire en l'absence de commande appliquée par la commande 74) dans la première configuration. L'actionnement de la commande 74 permet de faire basculer l'électrovanne tout ou rien 7 depuis la première configuration vers la seconde configuration. Ce basculement est du type tout ou rien, c'est-à-dire que l'application d'une commande via la commande 74 bascule directement l'électrovanne tout ou rien 7 dans la seconde configuration, contrairement à une électrovanne proportionnelle.

Le sélecteur de haute pression 8 relie donc l'actionneur hydraulique 58 de la valve de freinage 5 à celui parmi le troisième orifice 63 de l'électrovanne proportionnelle 6 et le troisième orifice 73 de l'électrovanne tout ou rien 7 qui est à la pression la plus élevée, cette pression étant ainsi la pression appliquée par l'actionneur hydraulique 58. Plus généralement, la commande hydraulique 54 réalise ainsi un pilotage en pression de la valve de freinage 5 par la pression la plus élevée parmi la pression délivrée par l'électrovanne proportionnelle 6 et la pression délivrée par l'électrovanne tout ou rien 7.

Le circuit de pilotage 100 peut être entièrement intégré dans un véhicule tel qu'un tracteur, ou être réparti entre le véhicule et la remorque associée. A titre d'exemple, dans le cas d'un circuit de pilotage 100 réparti entre le véhicule et la remorque associée, la valve de freinage 5 peut être montée sur la remorque, tandis que les autres éléments du circuit de pilotage sont montés sur le véhicule. Dans le cas où le circuit de pilotage 100 est monté sur le véhicule, ce dernier est muni d'un raccord hydraulique correspondant au troisième orifice 53 de la valve de freinage 5, permettant ainsi de le relier à un frein piloté 3 de remorque. Le circuit de pilotage 100 peut alors par exemple prendre la forme d'un module pouvant être intégré au véhicule, ou y être monté ultérieurement en complément du système hydraulique existant.

On décrit à présent un mode de fonctionnement que l'on qualifie de normal en référence à la figure 1. Par mode de fonctionnement normal, on entend que les différents composants ne présentent pas de défaillance.

Dans ce mode de réalisation, la source de pression 1 est en fonctionnement, l'utilisateur actionne la commande mécanique 410 pour piloter le frein principal 2 du véhicule via la première valve de freinage 4.

La valve de freinage 5 est quant à elle pilotée de manière à commander le frein piloté 3. Comme on l'a vu précédemment, l'actionneur hydraulique 58 est relié soit au troisième orifice 63 de l'électrovanne proportionnelle 6 soit au troisième orifice 73 de l'électrovanne tout ou rien 7. L'électrovanne tout ou rien 7 est basculée dans la seconde configuration par la commande 74 actionnée électriquement, de sorte que la seconde admission 82 du sélecteur de haute pression 8 est relié au réservoir R. L'électrovanne proportionnelle 6 est quant à elle pilotée via la commande électrique 64 de manière à délivrer une pression via son troisième orifice 63 proportionnelle à une commande 64 électrique.

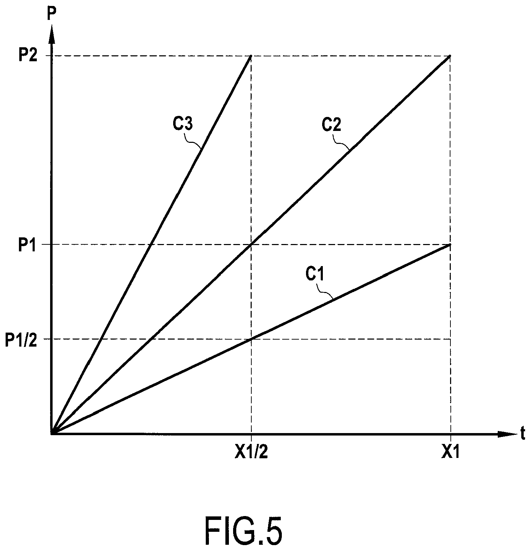

Ainsi, le sélecteur va relier l'actionneur hydraulique 58 au troisième orifice 63 de l'électrovanne proportionnelle 6, et ainsi permettre un freinage ou un défreinage contrôlé du frein piloté 3 via la commande électrique 64, cette dernière étant typiquement configurée de manière à appliquer une commande variable en fonction d'une consigne de freinage appliquée par le circuit de commande 200, typiquement en fonction de la commande appliquée par l'utilisateur via la commande mécanique 410 de manière à ce que le frein principal 2 et le frein piloté 3 soient synchronisés comme on le verra par la suite en référence à la figure 5.

La commande électrique 64 est ainsi typiquement pilotée par un contrôleur 130 tel qu'une unité de contrôle électronique ou ECU, configuré pour piloter la commande électrique 64 en fonction de la pression au niveau du troisième orifice 43 de la première valve de freinage 4 qui est égale à la pression au troisième orifice 103 du circuit de pilotage 100, et également en fonction d'un éventuel rapport de sortie appliqué par la commande hydraulique 54. Le contrôleur 130 est ainsi typiquement associé à un capteur de pression 135 configuré de manière à mesurer la pression au niveau du troisième orifice 43 de la première valve de freinage 4

A titre d'exemple, si on considère que la commande hydraulique 54 applique un rapport de 1, que le frein principal 2 est taré à une pression maximale de 60 bar et que le frein auxiliaire est taré à une pression maximale de 150 bar, le calculateur 130 va piloter la commande électrique 64 de manière à ce que la pression au niveau du troisième orifice 63 de l'électrovanne proportionnelle 6 soit égale à la pression au niveau du troisième orifice 43 de la première valve de freinage 4 multipliée par un rapport égal à 150/60.

Si on considère que la commande hydraulique 54 applique un rapport de 5, et que le frein principal 2 est taré à une pression maximale de 60 bar et que le frein auxiliaire est taré à une pression maximale de 150 bar, le calculateur 130 va piloter la commande électrique 64 de manière à ce que la pression au niveau du troisième orifice 63 de l'électrovanne proportionnelle 6 soit égale à la pression au niveau du troisième orifice 43 de la première valve de freinage 4 multipliée par un rapport égal à (150/5)/60, soit 30/60.

Si on considère que la commande hydraulique 54 applique un rapport de 5, et que le frein principal 2 est taré à une pression maximale de 20 bar et que le frein auxiliaire est taré à une pression maximale de 150 bar, le calculateur 130 va piloter la commande électrique 64 de manière à ce que la pression au niveau du troisième orifice 63 de l'électrovanne proportionnelle 6 soit égale à la pression au niveau du troisième orifice 43 de la première valve de freinage 4 multipliée par un rapport égal à (150/5)/20, soit 30/20.

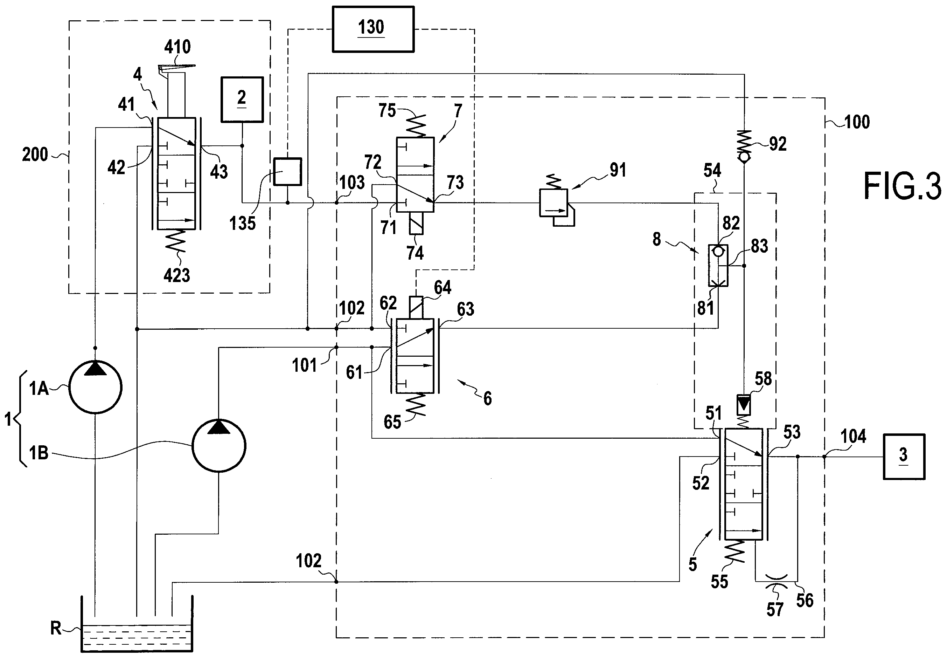

La commande hydraulique 54 est typiquement couplée à un réducteur de pression configuré de manière à limiter la pression appliquée à la commande hydraulique 54, typiquement interposé entre l'orifice de sortie 83 du sélecteur de haute pression 8 et la commande hydraulique 54, ou encore entre la seconde admission 82 du sélecteur de haute pression 8 et le troisième orifice 73 de l'électrovanne tout ou rien 7. Un tel réducteur de pression est typiquement taré à une pression comprise entre 20 et 30 bar, ou encore égale à 25 bar. La ligne hydraulique reliant l'orifice de sortie 83 du sélecteur de haute pression 8 et la commande hydraulique 54 peut également être munie d'un clapet anti retour taré, configuré de manière à déverser le fluide au-delà d'une valeur seuil de pression dans le réservoir R, par exemple une valeur seuil de pression comprise entre 25 et 35 bar, ou encore égale à 30 bar. Un tel réducteur de pression ou un tel clapet anti retour taré permettent ainsi de limiter la pression appliquée à la commande hydraulique 54. La figure 3 présente un mode de réalisation comprenant un réducteur de pression 91 et un clapet anti retour taré 92 tels que mentionnés. Typiquement, le réducteur de pression 91 et le clapet anti retour taré 92 sont tarés à une pression sensiblement équivalente à la pression maximale de pilotage de 54 (ici 30 bar pour une pression maximale de freinage de 150 bar avec un rapport de sortie de 5).

On représente également sur la figure 3 un exemple de variante dans laquelle la première valve de freinage 4 est reliée à une première source de pression 1A, tandis que l'électrovanne proportionnelle 6 est reliée à une seconde source de pression 1B. Dans l'exemple représenté sur la figure 1, ces deux sources de pression sont confondues. On comprend bien que le fonctionnement est identique que ces sources de pression soient distinctes, identiques, ou que le système présente une ou plusieurs sources de pression.

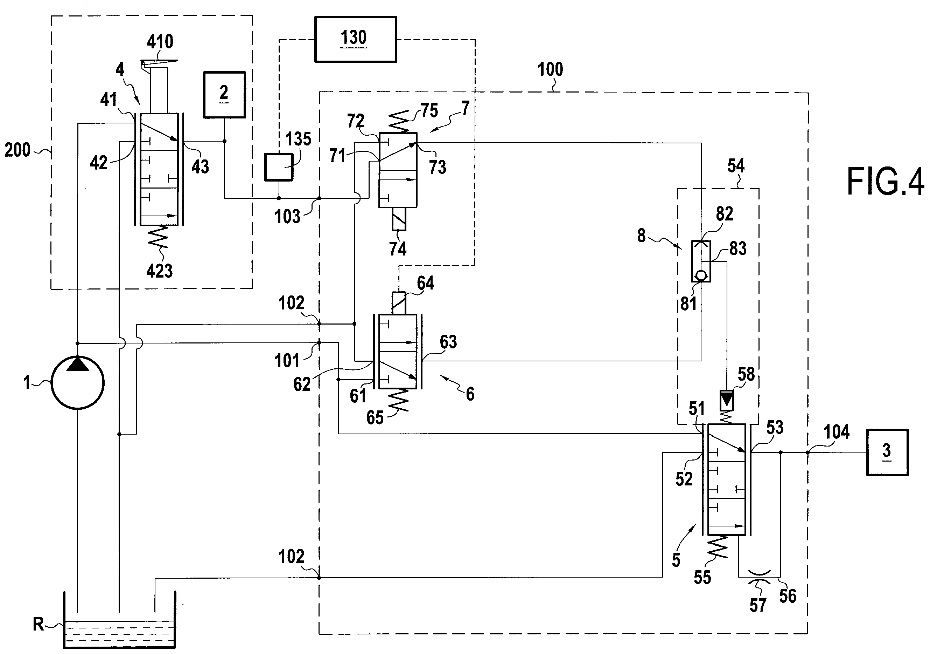

La figure 4 représente le circuit de freinage hydraulique de la figure 1 selon une seconde configuration correspondant à un fonctionnement que l'on qualifie de dégradé, pour lequel le système présente une défaillance électrique. On comprend en effet qu'en cas de défaillance électrique, la commande électrique 64 ne sera plus opérationnelle, ce qui peut donc être problématique pour le pilotage du frein piloté 3.

La figure 4 présente donc une configuration du circuit de freinage hydraulique dans laquelle les commandes électriques 64 et 74 sont désactivées, ce qui correspondant typiquement à l'état du circuit en cas de défaillance électrique. L'électrovanne proportionnelle 6 et l'électrovanne tout ou rien 7 sont alors chacune basculées dans leur première configuration, du fait de l'action de leurs moyens de rappel respectif 65 et 75.

On comprend donc que le pilotage du frein piloté 3 ne peut plus être réalisé au moyen de l'électrovanne proportionnelle. Le circuit proposé permet cependant de relier l'actionneur hydraulique 58 de la commande hydraulique 54 au troisième orifice 43 de la première valve de freinage 4 via l'électrovanne tout ou rien 7 dans sa première configuration. Le sélecteur de haute pression 8 bascule alors pour relier le troisième orifice 73 de l'électrovanne tout ou rien 7 à l'actionneur hydraulique 58, dans la mesure où le troisième orifice 63 de l'électrovanne proportionnelle 6 est relié au réservoir R.

L'actionneur hydraulique 58 est ainsi relié au troisième orifice 43 de la première valve de freinage 4, assurant ainsi une pression de commande pour la valve de freinage 5 pilotée notamment par l'utilisateur via la commande mécanique 410.

Le frein principal 2 peut nécessiter une pression supérieure à la pression de pilotage du frein piloté 3 pour son pilotage, de l'ordre du double. A titre d'exemple, un frein principal 2 de tracteur nécessite une pression de l'ordre de 60 bar, tandis qu'un frein piloté 3 de remorque nécessite une pression de l'ordre de 150 bar. Le mode de fonctionnement représenté sur la figure 3 implique donc que le frein principal 2 et le frein piloté 3 ne sont pas nécessairement synchronisés. En effet, si on considère un rapport de 2 entre la pression nécessaire pour le pilotage du frein principal 2 par rapport à la pression nécessaire pour le pilotage du frein piloté 3, on comprend que le frein piloté 3 appliquera son effort de freinage maximum alors que la commande mécanique 410 est à mi-course, et donc que le frein principal 2 n'exerce pas son effort de freinage maximum. On comprend toutefois que le mode de fonctionnement dégradé vise à permettre une utilisation limitée du véhicule et de sa remorque en cas de défaillance électrique, en vue de finir une mission déjà entamée avant d'effectuer les réparations nécessaires ou en vue d'amener l'équipement à un lieu de réparation tout en conservant une possibilité de freinage sur la remorque.

La figure 5 schématise l'action de freinage d'un véhicule équipé d'une remorque en mode « normal » et en mode « dégradé ».

Cette figure est un graphe représentant l'action de freinage d'un véhicule et de la remorque associée.

La courbe C1 représente l'action de freinage du véhicule, c'est à dire l'action du frein principal 2, qui est ici linéaire jusqu'à une valeur maximale P1 atteinte à une course X1, correspondant à la pression nominale pour exercer un effort de freinage maximal pour le véhicule concerné, par exemple de l'ordre de 60 bars.

La courbe C2 représente l'action de freinage du frein piloté 3, c'est-à-dire du frein de la remorque, en conditions d'utilisation normales, c'est-à-dire lorsque le système électrique est opérationnel. On voit alors que la pression maximale de freinage P2 (par exemple égale à 150 bar, via un pilotage tarée à 30 bars maximum via un ratio de pilotage de 5 comme décrit précédemment), est atteinte pour une course X1 de la commande mécanique 410 lorsque le frein principal 2 est soumis à la pression P1. Les actions de freinage du frein principal 2 et du frein piloté 3 sont donc synchronisées, cette synchronisation étant réalisée notamment via la commande électrique 64 de l'électrovanne proportionnelle 6.

La courbe C3 présente l'action de freinage du frein piloté 3, c'est-à-dire du frein de la remorque, en conditions d'utilisation dégradées telles que décrites précédemment en référence à la figure 4. La pression de freinage appliquée au frein piloté 3 est ici aussi linéaire jusqu'à la pression P2, on voit cependant que cette pression maximale de freinage P2 est atteinte pour une course X1/2 de la commande mécanique 410 alors que la pression de freinage appliquée au frein principal 2 n'est pas maximale. Dans l'exemple représenté, la pression maximale P2 est atteinte pour la courbe C3 alors que la courbe C1 est à une pression P1/2. En application donc, lorsque le conducteur du véhicule appuie sur la commande mécanique 410 pour obtenir un freinage moyen du véhicule, le frein piloté 3 de la remorque associée va exercer un freinage maximum. On comprend donc que le frein piloté 3 va appliquer un freinage maximal à la remorque alors que le frein principal 2 n'appliquera pas un effort de freinage maximal pour le véhicule. Les conditions de freinage sont donc dégradées par rapport au mode de fonctionnement normal, mais une fonction de freinage variable de la remorque via le frein piloté 3 reste donc assurée. Plus généralement, le freinage exercé par le frein piloté 3 présente un coefficient de proportionnalité pouvant différer par rapport à la consigne de freinage délivrée par le circuit de commande 200.

A l'inverse, si le frein principal 2 est taré à une pression inférieure à la pression maximale nécessaire pour freiner le frein piloté 3 (en prenant en compte l'éventuel rapport de sortie appliqué par la commande hydraulique 54), le frein piloté 3 réalisera un freinage inférieur au freinage maximal possible alors que le frein principal 2 exercera son freinage maximal. Dans une telle situation, la valve de freinage 5 peut alors être dimensionnée de manière à appliquer un rapport de sortie accru, afin de rétablir une situation dans laquelle le frein piloté 3 réalisera un freinage supérieur au freinage exercé par le frein principal 2. Ici encore, on comprend que ce fonctionnement dégradé demeure avantageux par rapport à des circuits dans lesquels aucun freinage du frein piloté 3 n'est possible.

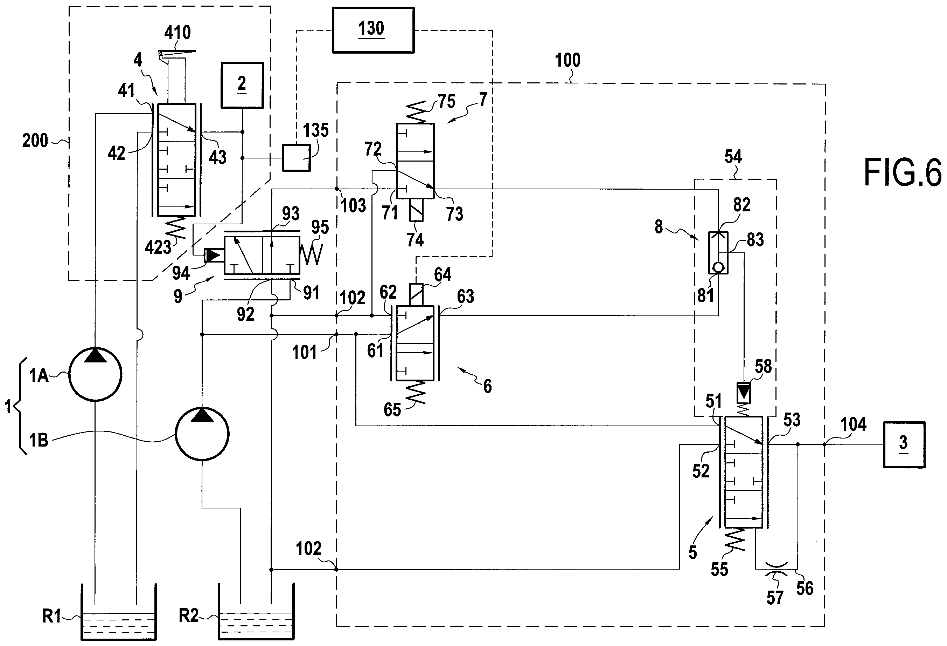

La figure 6 représente une autre variante d'un système selon la présente invention.

Cette figure est une variante du mode de réalisation représenté sur la figure 3, et représente un mode de réalisation dans lequel le frein principal 2 et le frein piloté 3 sont commandés par des fluides non miscibles, et doivent donc être reliés à des circuits hydrauliques distincts. Dans cette variante, la première source de pression 1A et la seconde source de pression 1B sont chacune reliée à des réservoirs distincts, respectivement un premier réservoir R1 et un second réservoir R2.

La première source de pression 1A est reliée au premier orifice 41 de la valve de freinage proportionnelle 4 du frein primaire 2, dont le deuxième orifice 42 est relié au premier réservoir R1. L'actionnement du frein primaire 2 est ainsi réalisé avec un premier fluide.

Le circuit de pilotage 100 est quant à lui alimenté en pression par la seconde source de pression 1B, et refoule le fluide dans le second réservoir R2, ce qui permet de définir une boucle hydraulique avec un second fluide, distinct du premier fluide.

Un tel mode de réalisation trouve notamment une application dans le cas où la valve de freinage 4, la première source de pression 1A et le premier réservoir R1 sont remplacés par un maître-cylindre, ce dernier combine alors les fonctions de source de pression, de réservoir de fluide et de pilotage de la pression délivrée au frein principal 2, et délivre une pression proportionnelle à une commande, typiquement une commande mécanique. Le fonctionnement d'un maître-cylindre est connu, et rappelé brièvement ci-après. Le maitre-cylindre comprend un piston mobile dans une chambre sous l'action d'une commande, typiquement une commande mécanique similaire à la commande mécanique 410. Cette chambre est reliée à un réservoir de fluide via des orifices qui sont obturés lorsque le déplacement du piston dépasse une valeur seuil. Une fois que les orifices liant la chambre au réservoir sont obturés, le déplacement du piston va compresser le fluide dans la chambre, de sorte que le fluide est mis sous pression et chassé hors de la chambre, ici vers le frein principal 2. La pression du fluide acheminé vers le frein principal 2 est donc pilotée par l'action de la commande appliquée sur le piston. Le fonctionnement du système demeure inchangé par rapport au fonctionnement décrit ci-après.

Une valve de pilotage 9 est alors ajoutée au circuit de pilotage 100. Cette valve de pilotage 9 est une valve proportionnelle, présentant un premier orifice 91, un deuxième orifice 92, et un troisième orifice 93. Le premier orifice 91 est relié à la seconde source de pression 1B, le deuxième orifice 92 est relié au second réservoir R2, et le troisième orifice 93 est relié au premier orifice 71 de l'électrovanne tout ou rien 7 via le troisième orifice 103 du circuit de pilotage 100. Le premier orifice 101 du circuit de pilotage 100 est relié à la seconde source de pression 1B, et le deuxième orifice 102 du circuit de pilotage 100 est relié au second réservoir R2.

La valve de pilotage 9 est pilotée par une commande hydraulique 94 à laquelle s'oppose un moyen de rappel élastique 95 tel qu'un ressort. La valve de pilotage 9 est pilotée par la commande hydraulique 94 et le moyen de rappel élastique 95 entre une première configuration dans laquelle le premier orifice 91 est obturé et le deuxième orifice 92 est relié au troisième orifice 93, et une seconde configuration dans laquelle le premier orifice 91 est relié au troisième orifice 93, et le deuxième orifice 92 est obturé. Le moyen de rappel élastique 95 tend à amener la valve de pilotage 9 dans sa première configuration, et donc à relier le troisième orifice 103 du circuit d pilotage 100 au second réservoir R2. La valve de pilotage 9 délivre donc à son troisième orifice 93 une pression proportionnelle à la commande appliquée par la commande hydraulique 94. La commande hydraulique 94 est reliée au troisième orifice 43 de la valve freinage proportionnelle 4. C'est donc la pression délivrée au frein primaire 2 qui pilote la commande hydraulique 94.

Le mode de fonctionnement demeure similaire au fonctionnement décrit précédemment, à la différence près que c'est ici la seconde source de pression 1B et non plus la première source de pression 1A qui délivre une pression via le troisième orifice 103 du circuit de pilotage 100. Cette pression est proportionnelle ou égale à la pression appliquée au frein principal 2 du fait de la valve de pilotage 9 dont la commande hydraulique 94 est reliée au troisième orifice 43 de la première valve de freinage proportionnelle 4. La pression appliquée au troisième orifice 103 est donc proportionnelle à la commande appliquée via la commande mécanique 410. On comprend ainsi qu'en calibrant la commande hydraulique 94 de sorte que la pression au troisième orifice 93 de la valve de pilotage 9 soit égale à la pression appliquée à la commande hydraulique 94, le fonctionnement est alors identique au fonctionnement décrit précédemment. Le troisième orifice 103 du circuit de pilotage 100 n'est donc plus alimenté en pression par la première source de pression 1, mais la pression qui y est appliquée reste pilotée par la valve de freinage proportionnelle 4.

La valve 94 et son moyen de rappel 95 peuvent également être dimensionnés pour moduler la pression à l'orifice 93 de manière identique à la valve 6 piloté électriquement. En cas de panne électrique le véhicule conserve le même comportement en freinage.

Un tel mode de réalisation permet donc de conserver des circuits hydrauliques disjoints pour le frein principal 2 et le frein piloté 3.

La valve de pilotage 9 peut typiquement être intégrée au circuit de pilotage 100, ou être un module auxiliaire pouvant être ajouté au circuit de pilotage 100 en fonction du véhicule sur lequel ce dernier est monté.

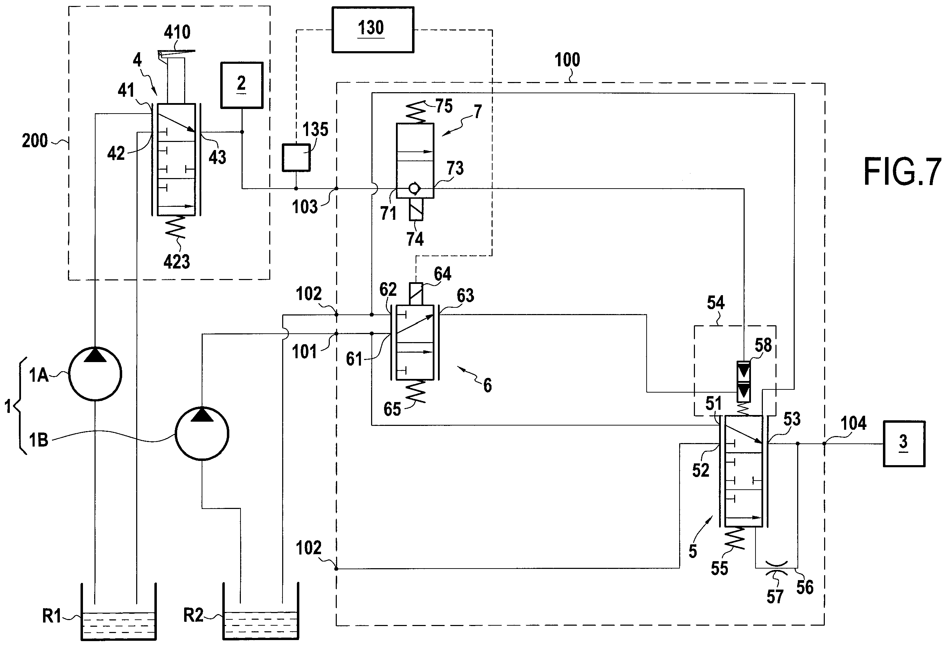

La figure 7 représente une autre variante d'un circuit de pilotage tel que proposé.

Dans ce mode de réalisation, l'actionneur hydraulique 58 de la commande hydraulique 54 est muni d'une valve additionnelle. L'actionneur hydraulique 58 présente ainsi deux pistons liés respectivement au troisième orifice 63 de l'électrovanne proportionnelle 6, et au troisième orifice 73 de l'électrovanne tout ou rien 7, et réalise un pilotage en pression de la valve de freinage 5 par la pression la plus élevée entre la pression au troisième orifice 63 de l'électrovanne proportionnelle 6 et la pression au troisième orifice 73 de l'électrovanne tout ou rien 7.

La figure 8 présente un exemple de valve de freinage 5 pouvant être employée dans une telle variante.

On retrouve sur cette figure la valve de freinage 5 comprenant un corps de valve 50, dans lequel coulisse un sélecteur 510 de manière à sélectivement relier les premier, deuxième et troisième orifices 51, 52 et 53. Le sélecteur 510 est déplacé sous l'action du moyen de rappel 55, ici un ressort, et de deux pistons, un premier piston 570 et un second piston 560, montés successivement dans le corps de vanne 50, et permettant d'exercer sur le sélecteur 510 un effort de poussée s'opposant à l'effort exercé par le moyen de rappel 55. Le corps de vanne 50 définit une première chambre 572 reliée via un troisième orifice 574 au troisième orifice 73 de l'électrovanne tout ou rien 7. Cette première chambre 572 est positionnée entre le premier piston 570 et le corps de vanne 50.

Une seconde chambre 562 est également formée dans le corps de vanne 50. Cette seconde chambre 562 est formée entre le premier piston 570 et le second piston 560, et est reliée via un second orifice 564 au troisième orifice 63 de l'électrovanne proportionnelle 6. En variante la première chambre 572 est reliée au troisième orifice 63 de l'électrovanne proportionnelle 6 et la seconde chambre 562 est reliée au troisième orifice 73 de l'électrovanne tout ou rien 7.

Une chambre de décharge 580 est également formée dans le corps de vanne 50, et est délimitée par le sélecteur 510 d'une part, et par le second piston 580 d'autre part. Cette chambre de décharge 580 est reliée via un orifice de décharge 584 au réservoir R, et comprend un moyen de rappel 586, ici un ressort, interposé entre le second piston 560 et le sélecteur 510. Cette chambre de décharge 580 reliée au réservoir R permet le déplacement en translation du sélecteur 510.

Comme on le voit sur la figure 8, la première chambre 572, le premier piston 570, la seconde chambre 562 et le second piston 560 sont montés en série. Par conséquent, le déplacement du sélecteur 510 est piloté par la pression la plus élevée parmi la pression au sein de la première chambre 572 et au sein de la seconde chambre 562, et donc par la pression la plus élevée parmi la pression délivrée par l'électrovanne proportionnelle 6 et la pression délivrée par l'électrovanne tout ou rien 7. Un fonctionnement similaire peut également être obtenu en montant le premier piston 570 et le second piston 560 en parallèle. La première chambre 572, le premier piston 570, la seconde chambre 562 et le second piston 560 forment ici l'actionneur hydraulique 58 de la commande hydraulique 54.

A nouveau en référence à la figure 7, on remarque par ailleurs que dans ce mode de réalisation, l'électrovanne tout ou rien 7 a été modifiée ; le deuxième orifice 72 relié au réservoir R a été supprimé. L'électrovanne tout ou rien 7 alterne ainsi entre une première configuration dans laquelle le premier orifice 71 est relié au troisième orifice 73 de manière à permettre un passage de fluide dans les deux sens, et une seconde configuration dans laquelle le passage de fluide depuis le premier orifice 71 vers le troisième orifice 73 est impossible (la circulation en sens inverse demeurant possible). La commande hydraulique 54 est ici également reliée au réservoir R de manière à permettre une purge de fluide.

Le fonctionnement demeure alors inchangé par rapport au fonctionnement déjà décrit en référence aux figures précédentes, la fonction du sélecteur de haute pression 8 étant ici directement remplie par l'actionneur de la commande hydraulique 54, comme on l'a décrit précédemment en référence à la figure 8 qui présente une valve de freinage 5 pouvant être employée pour ce mode de réalisation.

Ce type de montage est particulièrement avantageux dans le cas où les deux organes de freinages utilisent des huiles non miscibles et/ou non compatibles.

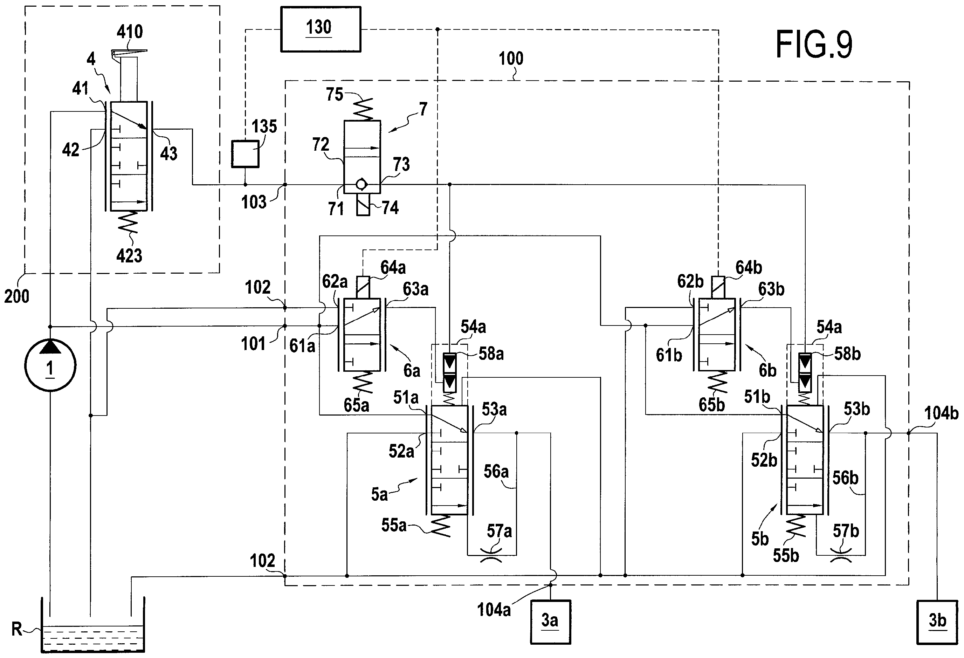

La figure 9 représente une autre variante d'un circuit de pilotage tel que proposé.

Dans le mode de réalisation représenté, le circuit de commande 200 est indépendant d'un frein principal de véhicule. Il s'agit donc ici plus généralement d'un circuit destiné à délivrer une pression proportionnelle à une consigne de commande.

Le circuit de pilotage 100 comprend ici deux valves de freinage 5a et 5b, et deux électrovannes proportionnelles 6a et 6b de manière à piloter deux freins pilotés distincts 3a et 3b. On comprend que ce mode de réalisation est uniquement illustratif, et qu'il peut être généralisé de manière à piloter de manière indépendante un nombre quelconque de freins pilotés. Les freins pilotés 3a et 3b peuvent par exemple correspondre aux freins agissant sur l'essieu avant et sur l'essieu arrière d'un véhicule, sur deux roues distinctes d'un véhicule, ou encore sur l'essieu moteur d'un véhicule et sur l'essieu d'un attelage associé au véhicule. L'un des freins auxiliaires peut également être le système de freinage principal d'un véhicule. L'électronique de contrôle permet ici de gérer des particularités des fonctions de freinages différents selon les conditions d'utilisation du véhicule et les organes de freinage associés. On peut, par exemple, réaliser un freinage différentiel droite / gauche, un pilotage d'assistance au démarrage en côte ou de blocage de frein de parking à l'aide d'un pilotage issu d'une unité de contrôle électronique du véhicule à partir de données d'entrées pouvant parvenir, à titre d'exemple non limitatifs, d'un capteur d'angle volant, d'une vitesse d'avance du véhicule, d'un inclinomètre, ou plus généralement de tout capteur permettant d'obtenir des informations relatives aux conditions de déplacement du véhicule.

Le fonctionnement demeure ici similaire au fonctionnement déjà décrit en référence à la figure 6. On précise ci-après les différences.

Le frein principal 2 a été retiré du circuit de commande 200, de sorte que le circuit de commande 200 délivre ici au circuit de pilotage 100 une pression proportionnelle à une consigne de freinage, ici appliquée par l'utilisateur au moyen de la commande mécanique 410. On comprend ici que tout autre moyen de commande peut être adapté, dès lors que la fonction de délivrer une pression proportionnelle à une commande au circuit de pilotage 100 est réalisée. De manière similaire, on comprend que le frein principal 2 est également optionnel dans, les schémas représentés sur les figures 1, 3, 4, 6 et 7.

Le circuit de pilotage 100 comprend deux valves de freinage 5a et 5b, et deux électrovannes proportionnelles 6a et 6b, pilotant ainsi deux freins pilotés 3a et 3b via deux orifices 104a et 104b. On définit ainsi deux sous-ensembles de pilotage dont les éléments sont repérés par des indices a ou b, chaque ensemble de pilotage comprenant une valve de freinage 5 et une électrovanne proportionnelle 6. Ces deux sous-ensembles de pilotage sont alimentés en parallèle via le premier orifice 101 du circuit de pilotage 100, et présentent chacun un fonctionnement similaire au fonctionnement déjà décrit en référence aux figures 1 à 7. On note cependant que les commandes hydrauliques 54a et 54b de chacune des valves de freinage auxiliaires 5a et 5b peuvent être tarées de manières distinctes, et que les commandes électriques 64a et 64b des électrovannes proportionnelles 6a et 6b peuvent être pilotées de manières distinctes de manière à piloter indépendamment les freins 3a et 3b.

L'électrovanne tout ou rien 7 permet ainsi réaliser un pilotage de chacun de ces sous-ensembles en cas de défaillance électrique. Dans l'exemple représenté, cette électrovanne tout ou rien 7 a été mutualisée pour les deux sous-ensembles de pilotage, ce qui est avantageux notamment en termes d'encombrement et de coût. On note cependant qu'un fonctionnement similaire peut être obtenu en ajoutant une électrovanne tout ou rien 7 pour chacun des sous-ensembles de pilotage.

Le circuit tel que proposé permet donc ici de piloter indépendamment plusieurs systèmes de freinage en permettant d'assurer un freinage proportionnel à une commande même en cas de défaillance électrique. Le circuit tel que proposé peut être étendu à un nombre quelconque de freins, en ajoutant pour chaque frein une valve de freinage 5, une électrovanne proportionnelle 6 et un orifice de sortie 104.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Circuit de pilotage (100) d'un frein piloté (3), comprenant un premier orifice (101) adapté pour être relié à une source de pression (1), un deuxième orifice (102) adapté pour être relié à un réservoir (R), un troisième orifice (103) adapté pour recevoir une pression proportionnelle à une consigne de freinage, et un quatrième orifice (104) adapté pour être relié à un frein piloté (3), ledit circuit de pilotage (100) comprenant
- une électrovanne proportionnelle (6) reliée au premier orifice (101) du circuit de pilotage (100),
- une électrovanne tout ou rien (7) reliée au troisième orifice (103) du circuit de pilotage (100),
- une valve de freinage (5) proportionnelle munie d'un actionneur (58), configurée de manière à sélectivement relier un frein piloté (3) à une source de pression (1, 1B) ou à un réservoir (R),
ledit circuit de pilotage (100) étant **caractérisé en ce que** l'actionneur (58) est configuré de manière à être pilotée par la pression la plus élevée parmi la pression délivrée par l'électrovanne proportionnelle (6) et la pression délivrée par l'électrovanne tout ou rien (7).

2. Circuit de pilotage (100) d'un frein piloté (3) selon la revendication 1, dans lequel l'actionneur (58) comprend une commande hydraulique (54) et un sélecteur (8) de haute pression configuré de manière à relier l'électrovanne proportionnelle (6) ou l'électrovanne tout ou rien (7) à la commande hydraulique (54),
l'électrovanne proportionnelle (6), l'électrovanne tout ou rien (7) et le sélecteur (8) étant configurés de manière à ce que dans une première configuration, la commande hydraulique (54) de la valve de freinage (5) soit reliée au premier orifice (101) du circuit de pilotage (100) via l'électrovanne proportionnelle (6), et que dans une seconde configuration, la commande hydraulique (54) de la valve de freinage (5) soit reliée au troisième orifice (103) du circuit de pilotage (100) via l'électrovanne tout ou rien (7).

3. Circuit de pilotage (100) selon la revendication 2, dans lequel la valve de freinage (5) présente un premier orifice (51) relié au premier orifice (101) du circuit de pilotage (100), un deuxième orifice (52) relié au deuxième orifice (102) du circuit de pilotage (100), un troisième orifice (53) relié au frein piloté (3), la valve de freinage (5) étant pilotée par un moyen de rappel élastique (55) auquel s'oppose une commande hydraulique (54), le moyen de rappel élastique (55) tendant à positionner la valve de freinage (5) dans une configuration dans laquelle son premier orifice (51) est obturé, et son deuxième orifice (52) est relié à son troisième orifice (53),
le sélecteur (8) présente une première admission (81), une seconde admission (82) et un refoulement (83), ledit refoulement (83) étant relié à la commande hydraulique (54) de la valve de freinage (5), le sélecteur (8) étant configuré de manière à relier l'admission (81, 82) présentant la pression la plus élevée au refoulement (83),
l'électrovanne proportionnelle (6) présentant un premier orifice (61) relié au premier orifice (101) du circuit de pilotage (100), un deuxième orifice (62) relié au deuxième orifice (102) du circuit de pilotage (100), et un troisième orifice (63) relié à la première admission (81) du sélecteur (8), l'électrovanne proportionnelle (6) étant pilotée par un moyen de rappel élastique (65) auquel s'oppose une commande électrique (64), le moyen de rappel élastique (65) tendant à positionner l'électrovanne proportionnelle (6) dans une configuration dans laquelle son premier orifice (61) est obturé, et son deuxième orifice (62) est relié à son troisième orifice (63),
l'électrovanne tout ou rien (7) présentant un premier orifice (71) relié au troisième orifice (103) du circuit de pilotage (100), un deuxième orifice (72) relié au deuxième orifice (102) du circuit de pilotage (100), et un troisième orifice (73) relié à la seconde admission (82) du sélecteur (8), l'électrovanne tout ou rien (7) étant pilotée par un moyen de rappel élastique (75) auquel s'oppose une commande électrique (74), le moyen de rappel élastique (75) tendant à positionner l'électrovanne tout ou rien (7) dans une configuration dans laquelle son deuxième orifice (72) est obturé, et son premier orifice (71) est relié à son troisième orifice (73).

4. Circuit de pilotage (100) selon la revendication 1, dans lequel l'actionneur (58) comprend un premier piston (570) associé à une première chambre (572) reliée à l'électrovanne tout ou rien (7), un second piston (560) associé à une seconde chambre (562) reliée à l'électrovanne proportionnelle (6), de sorte que le pilotage de la valve de freinage auxiliaire soit réalisé par la pression la plus élevée parmi la pression au sein de la première chambre (572) et la pression au sein de la seconde chambre (562).

5. Circuit de pilotage (100) selon l'une des revendications 1 à 4, comprenant en outre un réducteur de pression (91) configuré de manière à limiter la pression appliquée par la source de pression (1, 1B) à l'actionneur (58) de la valve de freinage (5) via le troisième orifice (103) du circuit de pilotage (100).

6. Circuit de pilotage (100) selon la revendication 5, dans lequel ledit réducteur de pression (91) est taré à 25 bar.

7. Circuit de pilotage (100) selon l'une des revendications 1 à 6, comprenant en outre clapet anti retour taré (92) reliant l'actionneur (58) de la valve de freinage (5) au deuxième orifice (102) du circuit de pilotage (100), ledit clapet anti retour taré étant configuré de manière à permettre un passage de fluide depuis l'actionneur (58) de la valve de freinage (5) vers le deuxième orifice (102) du circuit de pilotage (100) lorsque la pression appliquée à l'actionneur (58) de la valve de freinage (5) dépasse une valeur seuil de pilotage.

8. Circuit de pilotage (100) selon la revendication 7, dans lequel ladite valeur seuil de pilotage est égale à 30 bar.

9. Circuit de pilotage (100) selon l'une des revendications 1 à 8, dans lequel la valve de freinage (5) est configurée de manière à délivrer une pression de sortie via son troisième orifice (53) amplifiée d'un rapport de sortie par rapport à la pression de pilotage appliquée à l'actionneur (58).

10. Circuit de pilotage (100) selon la revendication 9, dans lequel ledit rapport de sortie est compris entre 4 et 9.

11. Circuit de pilotage (100) selon l'une des revendications précédentes, dans lequel le troisième orifice (103) du circuit de pilotage (100) est adapté pour recevoir une pression proportionnelle à une pression appliquée à un frein principal (2) de véhicule.

12. Véhicule comprenant
- un circuit de pilotage (100) selon l'une des revendications 1 à 11
- une source de pression (1) reliée au premier orifice (101) du circuit de pilotage (100),
- un réservoir (R) relié au deuxième orifice (102) du circuit de pilotage (100),
- un frein piloté (3) relié au quatrième orifice (104) du circuit de pilotage (100)
- un circuit de commande (200) configuré de manière à délivrer une pression proportionnelle à une consigne de freinage au troisième orifice (103) du circuit de pilotage (100).

13. Véhicule selon la revendication 12, dans lequel le circuit de commande (200) comprend
- un frein principal (2),
- une première valve de freinage (4) proportionnelle pilotant le frein principal (2), reliée à la source de pression (1), au troisième orifice (103) du circuit de pilotage (100) et au frein principal (2) et configurée de manière à délivrer une pression au troisième orifice (103) du circuit de pilotage (100) et au frein principal (2) proportionnelle à une commande mécanique (410).

14. Véhicule selon la revendication 13, comprenant en outre un calculateur (130) configuré de manière à commander l'électrovanne proportionnelle (6) en fonction de la pression délivrée au frein principal (2) par la première valve de freinage (2), notamment à l'aide d'un capteur de pression (135).

15. Véhicule comprenant
- un circuit de pilotage (100) selon l'une des revendications 1 à 11
- une première source de pression (1A) et une seconde source de pression (1B), ladite seconde source de pression étant reliée au premier orifice (101) du circuit de pilotage (100),
- un premier réservoir (R1) et un second réservoir (R2), le second réservoir (R2) étant relié au deuxième orifice (102) du circuit de pilotage (100),
- un frein piloté (3) relié au quatrième orifice (104) du circuit de pilotage (100),
- un circuit de commande (200) configuré de manière à moduler la pression issue de la première source de pression (1A) et à délivrer cette pression au frein principal (2), et à délivrer une pression proportionnelle à une consigne de freinage au troisième orifice (103) du circuit de pilotage (100)
- une valve de pilotage (9) proportionnelle, reliée à la seconde source de pression (1B), au second réservoir (R2) et au troisième orifice (103) du circuit de pilotage (100), et comprenant une commande hydraulique (94) reliée au frein principal (2), de manière à ce que la pression délivrée au troisième orifice (103) par la seconde source de pression (1B) via la valve de pilotage (9) soit proportionnelle à la pression délivrée au frein principal (2) par la première source de pression (1A).

## Patentansprüche

1. Ansteuerkreis (100) einer angesteuerten Bremse (3), umfassend eine erste Öffnung (101), die dazu geeignet ist, mit einer Druckquelle (1) verbunden zu werden, eine zweite Öffnung (102), die dazu geeignet ist, mit einem Reservoir (R) verbunden zu werden, eine dritte Öffnung (103), die dazu geeignet ist, einen Druck zu empfangen, der proportional zu einer Bremsanforderung ist, und eine vierte Öffnung (104), die dazu geeignet ist, mit einer angesteuerten Bremse (3) verbunden zu werden, wobei der Ansteuerkreis (100) umfasst
- ein Proportional-Magnetventil (6), das mit der ersten Öffnung (101) des Ansteuerkreises (100) verbunden ist,
- ein Ein-/Aus-Magnetventil (7), das mit der dritten Öffnung (103) des Ansteuerkreises (100) verbunden ist,
- ein Proportional-Bremsventil (5), das mit einem Stellglied (58) versehen und dazu ausgestaltet ist, eine angesteuerte Bremse (3) selektiv mit einer Druckquelle (1, 1B) oder mit einem Reservoir (R) zu verbinden,
wobei der Ansteuerkreis (100) **dadurch gekennzeichnet ist, dass** das Stellglied (58) dazu ausgestaltet ist, durch den höchsten Druck von dem Druck, der von dem Proportional-Magnetventil (6) geliefert wird, und dem Druck, der von dem Ein-/Aus-Magnetventil (7) geliefert wird, angesteuert zu werden.

2. Ansteuerkreis (100) einer angesteuerten Bremse (3) nach Anspruch 1, wobei das Stellglied (58) eine Hydrauliksteuerung (54) und einen Hochdruck-Selektor (8) umfasst, der dazu ausgestaltet ist, das Proportional-Magnetventil (6) oder das Ein-/ Aus-Magnetventil (7) mit der Hydrauliksteuerung (54) zu verbinden,
wobei das Proportional-Magnetventil (6), das Ein-/Aus-Magnetventil (7) und der Selektor (8) so ausgestaltet sind, dass in einer ersten Konfiguration die Hydrauliksteuerung (54) des Bremsventils (5) über das Proportional-Magnetventil (6) mit der ersten Öffnung (101) des Ansteuerkreises (100) verbunden ist, und dass in einer zweiten Konfiguration die Hydrauliksteuerung (54) des Bremsventils (5) über das Ein-/Aus-Magnetventil (7) mit der dritten Öffnung (103) des Ansteuerkreises (100) verbunden ist.

3. Ansteuerkreis (100) nach Anspruch 2, wobei
das Bremsventil (5) eine erste Öffnung (51), die mit der ersten Öffnung (101) des Ansteuerkreises (100) verbunden ist, eine zweite Öffnung (52), die mit der zweiten Öffnung (102) des Ansteuerkreises (100) verbunden ist, eine dritte Öffnung (53), die mit der angesteuerten Bremse (3) verbunden ist, aufweist, wobei das Bremsventil (5) durch ein elastisches Rückstellmittel (55) angesteuert wird, dem eine Hydrauliksteuerung (54) entgegenwirkt, wobei das elastische Rückstellmittel (55) dazu tendiert, das Bremsventil (5) in einer Konfiguration zu positionieren, in welcher seine erste Öffnung (51) gesperrt ist, und seine zweite Öffnung (52) mit seiner dritten Öffnung (53) verbunden ist,
der Selektor (8) einen ersten Eingang (81), einen zweiten Eingang (82) und einen Ausgang (83) aufweist, wobei der Ausgang (83) mit der Hydrauliksteuerung (54) des Bremsventils (5) verbunden ist und der Selektor (8) dazu ausgestaltet ist, den Eingang (81, 82), der den höchsten Druck aufweist, mit dem Ausgang (83) zu verbinden,
das Proportional-Magnetventil (6) eine erste Öffnung (61), die mit der ersten Öffnung (101) des Ansteuerkreises (100) verbunden ist, eine zweite Öffnung (62), die mit der zweiten Öffnung (102) des Ansteuerkreises (100) verbunden ist, und eine dritte Öffnung (63) aufweist, die mit dem ersten Eingang (81) des Selektors (8) verbunden ist, wobei das Proportional-Magnetventil (6) durch ein elastisches Rückstellmittel (65) angesteuert wird, dem eine Elektrosteuerung (64) entgegenwirkt, und das elastische Rückstellmittel (65) dazu tendiert, das Proportional-Magnetventil (6) in einer Konfiguration zu positionieren, in welcher seine erste Öffnung (61) gesperrt ist, und seine zweite Öffnung (62) mit seiner dritten Öffnung (63) verbunden ist,
das Ein-/Aus-Magnetventil (7) eine erste Öffnung (71), die mit der dritten Öffnung (103) des Ansteuerkreises (100) verbunden ist, eine zweite Öffnung (72), die mit der zweiten Öffnung (102) des Ansteuerkreises (100) verbunden ist, und eine dritte Öffnung (73) aufweist, die mit dem zweiten Eingang (82) des Selektors (8) verbunden ist, wobei das Ein-/Aus-Magnetventil (7) durch ein elastisches Rückstellmittel (75) angesteuert wird, dem eine Elektrosteuerung (74) entgegenwirkt, und das elastische Rückstellmittel (75) dazu tendiert, das Ein-/Aus-Magnetventil (7) in einer Konfiguration zu positionieren, in welcher seine zweite Öffnung (72) gesperrt ist, und seine erste Öffnung (71) mit seiner dritten Öffnung (73) verbunden ist.

4. Ansteuerkreis (100) nach Anspruch 1, wobei das Stellglied (58) einen ersten Kolben (570), der einer ersten Kammer (572), die mit dem Ein-/Aus-Magnetventil (7) verbunden ist, zugeordnet ist, und einen zweiten Kolben (560), der einer zweiten Kammer (562), die mit dem Proportional-Magnetventil (6) verbunden ist, zugeordnet ist, derart umfasst, dass die Ansteuerung des Zusatz-Bremsventils durch den höchsten Druck von dem Druck im Inneren der ersten Kammer (572) und dem Druck im Inneren der zweiten Kammer (562) realisiert wird.

5. Ansteuerkreis (100) nach einem der Ansprüche 1 bis 4, ferner umfassend einen Druckreduzierer (91), der dazu ausgestaltet ist, den durch die Druckquelle (1, 1B) auf das Stellglied (58) des Bremsventils (5) über die dritte Öffnung (103) des Ansteuerkreises (100) ausgeübten Druck zu begrenzen.

6. Ansteuerkreis (100) nach Anspruch 5, wobei der Druckreduzierer (91) auf 25 bar austariert ist.

7. Ansteuerkreis (100) nach einem der Ansprüche 1 bis 6, ferner umfassend eine austarierte Rückschlagklappe (92), die das Stellglied (58) des Bremsventils (5) mit der zweiten Öffnung (102) des Ansteuerkreises (100) verbindet, wobei die austarierte Rückschlagklappe dazu ausgestaltet ist, einen Durchgang von Fluid von dem Stellglied (58) des Bremsventils (5) zu der zweiten Öffnung (102) des Ansteuerkreises (100) zu erlauben, wenn der auf das Stellglied (58) des Bremsventils (5) ausgeübte Druck einen Ansteuerschwellenwert übersteigt.

8. Ansteuerkreis (100) nach Anspruch 7, wobei der Ansteuerschwellenwert gleich 30 bar ist.

9. Ansteuerkreis (100) nach einem der Ansprüche 1 bis 8, wobei das Bremsventil (5) dazu ausgestaltet ist, einen Ausgabedruck über seine dritte Öffnung (53) zu liefern, der um ein Ausgabeverhältnis in Bezug auf den auf das Stellglied (58) ausgeübten Ansteuerdruck verstärkt ist.

10. Ansteuerkreis (100) nach Anspruch 9, wobei das Ausgabeverhältnis zwischen 4 und 9 liegt.

11. Ansteuerkreis (100) nach einem der vorhergehenden Ansprüche, wobei die dritte Öffnung (103) des Ansteuerkreises (100) dazu geeignet ist, einen Druck zu empfangen, der proportional zu einem Druck ist, der auf eine Fahrzeug-Hauptbremse (2) ausgeübt wird.

12. Fahrzeug, umfassend
- einen Ansteuerkreis (100) nach einem der Ansprüche 1 bis 11
- eine Druckquelle (1), die mit der ersten Öffnung (101) des Ansteuerkreises (100) verbunden ist,
- ein Reservoir (R), das mit der zweiten Öffnung (102) des Ansteuerkreises (100) verbunden ist,
- eine angesteuerte Bremse (3), die mit der vierten Öffnung (104) des Ansteuerkreises (100) verbunden ist
- einen Steuerkreis (200), der dazu ausgestaltet ist, einen Druck zu liefern, der proportional zu einer Bremsanforderung an der dritten Öffnung (103) des Ansteuerkreises (100) ist.

13. Fahrzeug nach Anspruch 12, wobei der Steuerkreis (200) umfasst
- eine Hauptbremse (2),
- ein erstes Proportional-Bremsventil (4), das die Hauptbremse (2) ansteuert und mit der Druckquelle (1), der dritten Öffnung (103) des Ansteuerkreises (100) und der Hauptbremse (2) verbunden und dazu ausgestaltet ist, einen Druck an die dritte Öffnung (103) des Ansteuerkreises (100) und an die Hauptbremse (2) zu liefern, der proportional zu einer mechanischen Steuerung (410) ist.

14. Fahrzeug nach Anspruch 13, ferner umfassend einen Rechner (130), der dazu ausgestaltet ist, das Proportional-Magnetventil (6) in Abhängigkeit von dem Druck, der an die Hauptbremse (2) über das erste Bremsventil (2) geliefert wird, zu steuern, insbesondere mit Hilfe eines Drucksensors (135).

15. Fahrzeug, umfassend
- einen Ansteuerkreis (100) nach einem der Ansprüche 1 bis 11
- eine erste Druckquelle (1A) und eine zweite Druckquelle (1B), wobei die zweite Druckquelle mit der ersten Öffnung (101) des Ansteuerkreises (100) verbunden ist,
- ein erstes Reservoir (R1) und ein zweites Reservoir (R2), wobei das zweite Reservoir (R2) mit der zweiten Öffnung (102) des Ansteuerkreises (100) verbunden ist,
- eine angesteuerte Bremse (3), die mit der vierten Öffnung (104) des Ansteuerkreises (100) verbunden ist,
- einen Steuerkreis (200), der dazu ausgestaltet ist, den Druck, der von der ersten Druckquelle (1A) ausgegeben wird, zu modulieren und diesen Druck an die Hauptbremse (2) zu liefern, und einen Druck, der proportional zu einer Bremsanforderung ist, an die dritte Öffnung (103) des Ansteuerkreises (100) zu liefern
- ein Proportional-Ansteuerventil (9), das mit der zweiten Druckquelle (1B), dem zweiten Reservoir (R2) und der dritten Öffnung (103) des Ansteuerkreises (100) verbunden ist, und eine Hydrauliksteuerung (94) umfasst, die mit der Hauptbremse (2) derart verbunden ist, dass der von der zweiten Druckquelle (1B) über das Ansteuerventil (9) an die dritte Öffnung (103) gelieferte Druck proportional zu dem Druck ist, der von der ersten Druckquelle (1A) an die Hauptbremse (2) geliefert wird.

## Claims

1. A driver circuit (100) for driving a driven brake (3), which driver circuit has a first orifice (101) adapted to be connected to a pressure source (1), a second orifice (102) adapted to be connected to a reservoir (R), a third orifice (103) adapted to receive a pressure proportional to a braking setpoint, and a fourth orifice (104) adapted to be connected to a driven brake (3), said driver circuit (100) including:
• a proportional solenoid valve (6) connected to the first orifice (101) of the driver circuit (100);
• an on/off solenoid valve (7) connected to the third orifice (103) of the driver circuit (100); and
• a proportional braking valve (5) provided with an actuator (58) and configured in such a manner as to connect a driven brake (3) selectively to a pressure source (1, 1B) or to a reservoir (R);
said driver circuit (100) being **characterized in that** the actuator (58) is configured in such a manner as to be driven by the higher of the two pressures delivered by the proportional solenoid valve (6) and delivered by the on/off solenoid valve (7).

2. A driver circuit (100) for driving a driven brake (3) according to claim 1, wherein the actuator (58) comprises a hydraulic control (54) and a high-pressure selector (8) that is configured in such a manner as to connect the proportional solenoid valve (6) or the on/off solenoid valve (7) to the hydraulic control (54);
the proportional solenoid valve (6), the on/off solenoid valve (7) and the selector (8) being configured in such a manner that, in a first configuration, the hydraulic control (54) of the braking valve (5) is connected to the first orifice (101) of the driver circuit (100) via the proportional solenoid valve (6), and, in a second configuration, the hydraulic control (54) of the braking valve (5) is connected to the third orifice (103) of the driver circuit (100) via the on/off solenoid valve (7).

3. A driver circuit (100) according to claim 2, wherein:
the braking valve (5) has a first orifice (51) connected to the first orifice (101) of the driver circuit (100), a second orifice (52) connected to the second orifice (102) of the driver circuit (100), and a third orifice (53) connected to the driven brake (3), the braking valve (5) being driven by resilient return means (55) that are opposed by a hydraulic control (54), the resilient return means (55) urging the braking valve (5) to be positioned in a configuration in which its first orifice (51) is closed off, and its second orifice (52) is connected to its third orifice (53); and
the selector (8) has a first admission (81), a second admission (82) and a delivery (83), said delivery (83) being connected to the hydraulic control (54) of the braking valve (5), the selector (8) being configured in such a manner as to connect the admission (81, 82) that has the higher pressure to the delivery (83);
the proportional solenoid valve (6) having a first orifice (61) connected to the first orifice (101) of the driver circuit (100), a second orifice (62) connected to the second orifice (102) of the driver circuit (100), and a third orifice (63) connected to the first admission (81) of the selector (8), the proportional solenoid valve (6) being driven by resilient return means (65) that are opposed by a hydraulic control (64), the resilient return means (65) urging the proportional solenoid valve (6) to be positioned in a configuration in which its first orifice (61) is closed off, and its second orifice (62) is connected to its third orifice (63); and
the on/off solenoid valve (7) having a first orifice (71) connected to the third orifice (103) of the driver circuit (100), a second orifice (72) connected to the second orifice (102) of the driver circuit (100), and a third orifice (73) connected to the second admission (82) of the selector (8), the on/off solenoid valve (7) being driven by resilient return means (75) that are opposed by a hydraulic control (74), the resilient return means (75) urging the on/off solenoid valve (7) to be positioned in a configuration in which its second orifice (72) is closed off, and its first orifice (71) is connected to its third orifice (73).

4. A driver circuit (100) according to claim 1, wherein the actuator (58) includes a first piston (570) associated with a first chamber (572) connected to the on/off solenoid valve (7), and a second piston (560) associated with a second chamber (562) connected to the proportional solenoid valve (6), so that the auxiliary braking valve is driven by the higher of the two pressures constituted by the pressure inside the first chamber (572) and by the pressure inside the second chamber (562).

5. A driver circuit (100) according to any one of claims 1 to 4, further including a pressure reducer (91) configured in such a manner as to limit the pressure applied by the pressure source (1, 1B) to the actuator (58) of the braking valve (5) via the third orifice (103) of the driver circuit (100).

6. A driver circuit (100) according to claim 5, wherein said pressure reducer (91) is calibrated to 25 bars.

7. A driver circuit (100) according to any one of claims 1 to 6, further including a calibrated check valve (92) connecting the actuator (58) of the braking valve (5) to the second orifice (102) of the driver circuit (100), said calibrated check valve being configured in such a manner as to allow fluid to pass through from the actuator (58) of the braking valve (5) to the second orifice (102) of the driver circuit (100) when the pressure applied to the actuator (58) of the braking valve (5) exceeds a drive threshold value.

8. A driver circuit (100) according to claim 7, wherein said drive threshold value is equal to 30 bars.

9. A driver circuit (100) according to any one of claims 1 to 8, wherein the braking valve (5) is configured in such a manner as to deliver an outlet pressure via its third orifice (53), which pressure is amplified by an outlet ratio relative to the drive pressure applied to the actuator (58).

10. A driver circuit (100) according to claim 9, wherein said outlet ratio lies in the range 4 to 9.

11. A driver circuit (100) according to any preceding claim, wherein the third orifice (103) of the driver circuit (100) is adapted to receive a pressure that is proportional to a pressure applied to a vehicle main brake (2).

12. A vehicle including:
• a driver circuit (100) according to any one of claims 1 to 11;
• a pressure source (1) connected to the first orifice (101) of the driver circuit (100);
• a reservoir (R) connected to the second orifice (102) of the driver circuit (100);
• a driven brake (3) connected to the fourth orifice (104) of the driver circuit (100); and
• a control circuit (200) configured in such a manner as to deliver a pressure that is proportional to a braking setpoint to the third orifice (103) of the driver circuit (100).

13. A vehicle according to claim 12, wherein the control circuit (200) includes:
• a main brake (2); and
• a proportional first braking valve (4) driving the main brake (2), connected to the pressure source (1), to the third orifice (103) of the driver circuit (100) and to the main brake (2) and configured in such a manner as to deliver a pressure that is proportional to a mechanical control (410) to the third orifice (103) of the driver circuit (100) and to the main brake (2).

14. A vehicle according to claim 13, further including a computer (130) configured in such a manner as to control the proportional solenoid valve (6) as a function of the pressure delivered to the main brake (2) by the first braking valve (2), in particular by means of a pressure sensor (135).

15. A vehicle including:
• a driver circuit (100) according to any one of claims 1 to 11;
• a first pressure source (1A) and a second pressure source (1B), said second pressure source being connected to the first orifice (101) of the driver circuit (100);
• a first reservoir (R1) and a second reservoir (R2), the second reservoir (R2) being connected to the second orifice (102) of the driver circuit (100);
• a driven brake (3) connected to the fourth orifice (104) of the driver circuit (100);
• a control circuit (200) configured in such a manner as to modulate the pressure coming from the first pressure source (1A) and to deliver said pressure to the main brake (2), and to deliver a pressure that is proportional to a braking setpoint to the third orifice (103) of the driver circuit (100); and
• a proportional driving valve (9) connected to the second pressure source (1B), to the second reservoir (R2) and to the third orifice (103) of the driver circuit (100), and including a hydraulic control (94) connected to the main brake (2), in such a manner that the pressure delivered to the third orifice (103) by the second pressure source (1B) via the driving valve (9) is proportional to the pressure delivered to the main brake (2) by the first pressure source (1A).
